# EUROPÄISCHE PATENTANMELDUNG

(11) **EP 1 484 230 A2**
(43) Veröffentlichungstag der Anmeldung: **08.12.2004**
(21) Anmeldenummer: 04013411.6
(22) Anmeldetag: 07.06.2004
(51) Int. Cl.: B62B 9/08

(54) **Mit Bremszügen betätigbare Bremseinrichtung**

(30) Priorität: 03.12.2003 DE 20318719 U; 07.06.2003 DE 20309407 U
(71) Anmelder: Weber, Herbert, D-82354 Breitbrunn (DE)
(72) Erfinder: Weber, Herbert, D-82354 Breitbrunn (DE)
(74) Vertreter: Alber, Norbert, Dipl.-Ing.

(57) **Zusammenfassung**

Bremszug für eine Achseinheit mit zwei auf einer Laufradachse angeordneten Laufrädern (3a,3b), zum Betätigen von mehreren Bremsen, die den Laufrädern einer Achseinheit (4) zugeordnet sind, der es ermöglicht, mit nur einer Hand wenigstens zwei Bremseinrichtungen (5a,5b) gleichzeitig zu betätigen, wobei die jeweils den Laufradeinheiten zugeordneten Bremsen (5a,5b) durch Betätigen eines einzigen Betätigungsseilszuges betätigbar sind.

## Beschreibung

### I. Anwendungsgebiet

Die Erfindung betrifft einen Bremszug für eine Achseinheit mit zwei auf einer Laufradachse angeordneten Laufrädern, zum Betätigen der den Laufrädem zugeordneten Bremseinrichtungen.

### II. Technischer Hintergrund

Zum Bremsen von Laufrädern, wie sie z.B. bei Fahrrädern und Kinderwägen Anwendung finden, sind eine Reihe unterschiedlicher Bremseinrichtungen bekannt. Beispiele sind die Altenburger-Bremse, die Cantileverbremse, die Scheibenbremse oder die V-Bremse. Diese bekannten Bremseinrichtungen arbeiten nach dem Prinzip der Reibung, wobei Bremsbacken mit Gummibelägen gegen die Seitenfläche der Felgen bzw. im Falle einer Scheibenbremse gegen die Bremsscheibe selbst gedrückt werden, um auf Anforderung eine Bremswirkung durch Reibung und folglich eine Verzögerung des Laufrads herbeizuführen.

Die Bremsanforderung erfolgt üblicherweise mechanisch mittels eines Seilzugs bzw. Bowdenzugs, wobei durch Ziehen am Seilzug - zumeist manuell durch einen Bediener- die zurückgelegte Zugstrecke an der Bremseinrichtung in eine Bewegung der Bremsbacken in Richtung Felge bzw. Bremsscheibe umgesetzt wird.

Sollen die Bremsen von zwei Laufrädern, wie z.B. bei einem Kinderwagen oder einem Dreirad, betätigt werden, sind hierzu jeweils zwei getrennte Seilzüge erforderlich, nämlich ein Seilzug für das erste Laufrad und ein Seilzug für das zweite Laufrad.

Da jedoch im Falle eines Dreirads üblicherweise auch am vorderen Einzelrad eine Vorderbremse vorgesehen ist, die über einen separaten Seilzug mittels eines Bremshebels am Lenkrad manuell betätigbar ist, hat der Bediener naturgemäß nur noch eine Hand zur Verfügung zur Betätigung lediglich einer auf der Achseinheit befindlichen Bremse. Weiterhin soll es möglich sein, sowohl aus sicherheitstechnischen Gründen als auch zum Zwecke der einfacheren Handhabung, einen Kinderwagen mit nur einer Hand zu bremsen, so dass dem Bediener eine Hand für andere Zwecke zu Verfügung steht.

### III. Darstellung der Erfindung

### a) Technische Aufgabe

Es ist daher die Aufgabe der vorliegenden Erfindung, einen Bremszug zum Betätigen von mehreren Bremsen, die den Laufrädern einer Achseinheit zugeordnet sind, zu schaffen, der es ermöglicht, mit nur einer Hand wenigstens zwei Bremseinrichtungen gleichzeitig zu betätigen.

### b) Lösung der Aufgabe

Erfindungsgemäß wird diese Aufgabe durch einen Bremszug gemäß dem Schutzanspruch 1 gelöst. Vorteilhafte Ausgestaltungen der Erfindung sind jeweils Gegenstand von Unteransprüchen.

Der Kerngedanke der Erfindung besteht darin, dass die jeweils den Laufrädern zugeordneten Bremsen durch Betätigen eines einzigen Betätigungsseilzuges betätigbar sind.

Der Vorteil der Erfindung besteht darin, dass lediglich ein einziger Betätigungsseilzug und eine einzige Betätigungseinrichtung, wie z.B. ein Bremshebel, erforderlich sind und folglich eine kostengünstige Herstellung durch Einsparung von Bauteilen erreicht wird, lediglich eine Hand zur Betätigung gleich mehrerer Bremsen erforderlich ist, und die mehreren Bremsen gleichzeitig betätigbar sind, so dass ein Verziehen der Fahrtrichtung des Fahrzeugs beim Bremsvorgang verhindert wird. Hierzu sind der Bremszug und die Bremsen derart eingestellt, dass beim Bremsvorgang an den Laufrädern der Achseinheit an den Bremsen jeweils dieselbe Bremswirkung entfaltet wird.

Es ist vorgeschlagen, einen Bremskraftverteiler dazu zu verwenden, die Zugkraft des Betätigungsseilzugs auf wenigstens zwei, den Laufradeinheiten bzw. Laufrad plus Bremse zugeordneten Bremsseile zu verteilen. Als Betätigungsseilzug wird der auf dem Gebiet der Fahrradtechnik bewährte und weit verbreitete "Bowdenzug" vorgeschlagen. Dieser besteht im Wesentlichen aus einem Seilzug und einer den Seilzug umgebenden Hülle.

Beim Betätigen des Betätigungsseilzuges wird durch den Bremskraftverteiler in vorteilhafter Weise die Zugbewegung des Betätigungsseilzugs in jeweils zwei gegenläufige Zugbewegungen der Bremseile in Richtung zur Achsmitte umgesetzt, durch welche die Bremsen betätigt werden. Es ist auch möglich, dass nur eines der Bremseile auf das jeweils andere zu bewegt wird.

In beiden Fällen ergibt sich beim Betätigen des Seilzuges eine Verkürzung der Gesamtlänge von Bremsseilen und Bremskraftverteiler und folglich eine Zugbewegung in beiden Bremsseilen in Richtung zur Achsmitte, wodurch die Bremsen betätigt werden.

Im an der Achseinheit angebrachten Zustand des Bremszugs sind die beiden Bremsseile zwischen zwei auf der Laufradachse gegenüberliegenden Bremsen vorgespannt befestigt, so dass sie im Wesentlichen parallel zur Laufradachse verlaufen. Dabei ist der Bremskraftverteiler in etwa mittig zwischen den beiden Laufradeinheiten angeordnet. Es ist jedoch auch möglich, dass bei unterschiedlich langen Bremsseilen der Bremskraftverteiler außermittig angeordnet ist. Der Bremskraftverteiler kann ein Rumpfteil in Form eines Rahmenteils oder eines Gehäuses, insbesondere ein kastenähnliches oder zylindrisches oder ovales Gehäuse aufweisen.

Vorzugsweise weist der Bremskraftverteiler eine Umlenkeinrichtung auf, durch die der am Bremskraftverteiler ankommende Betätigungsseilzug umgelenkt wird und mit seinem vom Bremskraftverteiler ausgehenden Ende zum Betätigen der einer ersten Laufradeinheit zugeordneten Bremse daran befestigt ist. Die Umlenkeinrichtung kann in Form einer Umlenkrolle oder eines mit dem Gehäuse der Umlenkeinrichtung einstückig ausgebildeten Teils mit einer zylindrischen Außenfläche vorgesehen sein.

Der durch die Umlenkeinrichtung des Bremskraftverteilers in eine andere Richtung geführte Teil des Betätigungsseilzuges zwischen dem Bremskraftverteiler und der ersten Bremse wird als das erste Bremsseil bezeichnet. Der ankommende Betätigungsseilzug wird vorzugsweise um einen Winkel kleiner 270°, insbesondere kleiner 210°, und insbesondere um in etwa 180°, also in einer im Wesentlichen entgegengesetzten Richtung umgelenkt.

Zwischen dem Bremskraftverteiler und der einer zweiten Laufradeinheit zugeordneten Bremse ist ein zweites Bremsseil vorgesehen, insbesondere daran befestigt, durch welches die Bremse der zweiten Laufradeinheit betätigbar ist. Das Bremsseil kann in Form eines Drahtseils oder einer starren Verstellstange vorgesehen sein.

Auf der der ersten Laufradeinheit zugeordneten Seite des Bremskraftverteilers sind wenigstens eine oder zwei separate Durchgangsöffnungen am Gehäuse des Bremskraftverteilers vorgesehen, durch welche(s) jeweils der ankommende Betätigungsseilzug und der ausgehende Betätigungsseilzug bzw. das erste Bremsseil hindurch verläuft.

Für den Fall, dass der Betätigungsseilzug ein Bowdenzug ist, stützt sich die Hülle des am Bremskraftverteiler ankommenden Bowdenzugs an der Außenseite des Gehäuses des Bremskraftverstärkers ab oder ist mit ihrem Ende am Gehäuse befestigt.

Bei einer Bremsanforderung durch den Bediener wird vorzugsweise durch Verschieben des Betätigungsseilzuges in Richtung weg vom Bremskraftverteiler die der ersten Laufradeinheit zugeordnete Bremse, an welcher das erste Bremsseil befestigt ist, betätigt und gleichzeitig der gesamte Bremskraftverteiler samt des an ihm befestigten Bremsseils bzw. der Bremsstange in Richtung zur ersten Laufradeinheit verschoben, so dass gleichzeitig durch diese Verschiebung die der zweiten Laufradeinheit zugeordnete Bremse betätigt wird.

Alternativ kann der Bremskraftverteiler aus einem Gehäuse und einem im Gehäuse in Längsrichtung verschiebbaren Führungsteil bestehen, wobei das Gehäuse eine Gehäuse-Durchgangsöffnung aufweist und das verschiebbare Führungsteil eine mit der Gehäuse-Durchgangsöffnung fluchtende Durchgangsöffnung aufweist. Das Gehäuse kann dabei auch in Form eines Rahmens mit Längsführungen vorgesehen sein, in welchem das Führungsteil angeordnet ist, wobei das Führungsteil innerhalb des Rahmens in Längsrichtung um einen bestimmten Verschiebeweg verschiebbar ist, der durch jeweils in Längsrichtung gegenüberliegende Rahmenteile begrenzt ist.

Dabei ist der Betätigungsseilzug vorzugsweise als Bowdenzug ausgeführt. Der Seilzug des Bowdenzugs erstreckt sich durch die Gehäuse-Durchgangsöffnung und durch die Durchgangsöffnung im Führungsteil und ist an der Innenseite des Gehäuses befestigt. Die Hülle dagegen erstreckt sich lediglich durch die Gehäuse-Durchgangsöffnung und stützt sich am verschiebbaren Führungsteil ab oder ist daran befestigt.

Zum Betätigen der wenigstens zwei Bremsen sind vorzugsweise ein erstes und ein zweites Bremsseil vorgesehen. Das erste Bremsseil erstreckt sich durch die Gehäuse-Durchgangsöffnung oder eine separat vorgesehene Durchgangsöffnung, wobei ein Ende des ersten Bremsseils am Führungsteil befestigt ist und das gegenüberliegende Ende des ersten Bremsseils an der einer ersten Laufradeinheit zugeordneten Bremse befestigt ist. Das zweite Bremsseil ist mit einem Ende an der der Gehäuse-Durchgangsöffnung gegenüberliegenden Seite außen am Gehäuse befestigt und mit dem anderen Ende der einer zweiten Laufradeinheit zugeordneten Bremse befestigt.

Durch das Verschieben des Betätigungsseilzuges wird das Gehäuse des Bremskraftverteilers in Richtung zur Hülle des Bowdenzuges verschoben, so dass sich das Führungsteil samt dem an ihm befestigten ersten Bremsseil relativ zum Gehäuse in Richtung zu der der Gehäuse-Durchgangsöffnung gegenüberliegenden Innenseite des Gehäuses verschiebt, wodurch die Gesamtlänge von erstem Bremsseil, zweitem Bremsseil und Bremskraftverteiler verkürzt und folglich beide den Laufradeinheiten zugeordneten Bremsen gleichzeitig betätigt werden.

Eine weitere Möglichkeit besteht darin, dass im Inneren des Gehäuses des Bremskraftverteilers ein um eine Drehachse drehbar gelagertes Drehelement vorgesehen ist, wobei die beiden Bremsseile an Stellen auf dem Drehelement befestigt sind, die sich bezüglich der Drehachse jeweils auf gegenüberliegenden Seiten am Drehelement befinden, und der Betätigungsseilzug an einer Stelle am Drehelement befestigt ist, die noch weiter von der Drehachse beabstandet ist als die Stellen, an denen die Bremsseile befestigt sind.

Vorzugsweise ist im Gehäuse eine Durchgangsöffnung, durch welche sich der Betätigungsseilzug in das Gehäuse erstreckt, und jeweils auf den den Laufradenheiten zugewandten Seiten des Gehäuses jeweils eine Durchgangsöffnung zum Durchführen der Bremsseile vorgesehen.

Als Drehelement kann eine drehbar gelagerte Stange, eine um ihren Mittelpunkt drehbar gelagerte oder ein V-förmiger Bügel mit einem ersten und einem zweiten Schenkel verwendet werden.

An einem äußeren Ende des V-Bügels kann ein weiterer Schenkel ausgebildet sein, der sich vom Inneren des Gehäuses nach außerhalb des Gehäuses erstreckt und zum Betätigen mittels einer Fußpedalvorrichtung vorgesehen ist. Folglich kann der Bremszug sowohl mittels z.B. Handbetätigung über dem Betätigungsseilzug als auch mittels Fußpedal betätigt werden.

An jedem Ende des V-Bügels kann jeweils ein Verbindungselement drehbar befestigt sein, wobei sich die beiden Verbindungselemente durch das Gehäuse erstrecken und außerhalb des Gehäuses jeweils mit dem ersten und zweiten Bremsseil verbunden sind. Durch die Verbindungselemente ist es möglich die Bremsseile von außerhalb des Gehäuses am Bremskraftverteiler zu befestigen.

In vorteilhafter Weise haben die Verbindungselemente jeweils eine Langlochführung, durch welche sich Führungsbolzen, die vorzugsweise senkrecht zur Drehebene des Drehelements gebildet sind, erstrecken.

Weiterhin kann ein Betätigungs-Drehteil am Bremskraftverteiler, das um eine Drehachse parallel zum Betätigungsseilzug bezüglich des Bremskraftverteilers drehbar gelagert ist, mit einer Mitnehmer-Durchgangsöffnung zum Durchführen des ankommenden Betätigungsseilzuges, welche bei Drehung des Betätigungs-Drehteils den Betätigungsseilzug in Drehrichtung mitnimmt, vorgesehen sein. An diesem Betätigungs-Drehteil kann wiederum eine Fußpedalvorrichtung vorgesehen sein, durch welche das Betätigungs-Drehteil von einem Bediener zur Betätigung des Betätigungsseilzuges in Drehung versetzt werden kann. Dies stellt eine sowohl einfache als auch effektive Realisierung einer Fußpedalbremse dar.

### c) Ausführungsbeispiele

Ausführungsformen gemäß der Erfindung sind im Folgenden beispielhaft näher beschrieben. Es zeigen:
- Fig. 1:: eine Ansicht von oben teilweise im Schnitt einer ersten Ausführungsform des erfindungsgemäßen Bremszuges;
- Fig. 2:: eine Ansicht von oben teilweise im Schnitt einer zweiten Ausführungsform des erfindungsgemäßen Bremszuges;
- Fig. 3a: eine perspektivische Vorderansicht einer dritten Ausführungsform des erfindungsgemäßen Bremszuges;
- Fig. 3b: eine perspektivische Vorderansicht des Bremszugs in Fig. 3a mit einem Fußpedal;
- Fig. 4a: eine Ansicht von oben teilweise im Schnitt des Bremskraftverteilers in Fig. 1 mit einem Fußpedal; und
- Fig. 4b: eine Seitenansicht des Fußpedals in Fig. 4a.

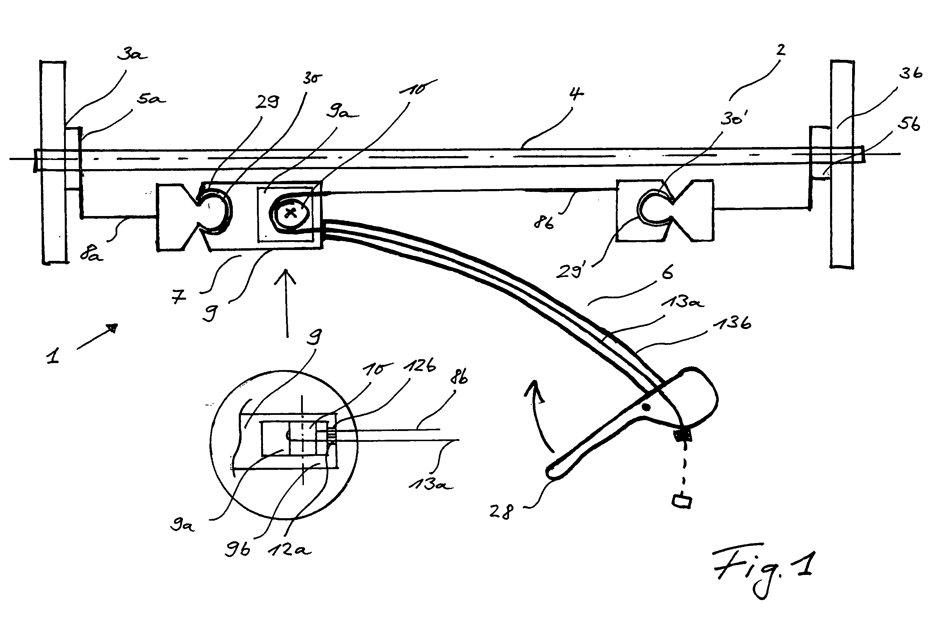

Fig. 1 zeigt eine erste Ausführungsform des erfindungsgemäßen Bremszuges 1, der an einer Achseinheit 2 angeordnet ist.

Die Achseinheit setzt sich aus einer Laufradachse 4 und an deren beiden äußeren Enden angeordneten Laufradeinheiten 3a und 3b zusammen, wobei jeweils ein Laufrad und eine ihm zugeordnete Bremse 5a bzw. 5b eine Laufradeinheit 3a bzw. 3b bilden.

Zur einfacheren Darstellung sind in Fig. 1 die Bremsen 5a und 5b schematisch in vereinfachter Form dargestellt und jeweils an den der Achsmitte zugewandten Seiten der beiden Laufräder angeordnet. Als Bremsen 5a und 5b können z.B. Altenburger-Bremsen, Cantileverbremsen, Mittelzugbremsen, Scheibenbremsen, V-Bremsen usw., die mittels eines Seilzugs betätigbar sind, verwendet werden.

Der Bremszug 1 umfasst einen Betätigungsseilzug 6 in Form eines Bowdenzugs mit einem Seilzug 13a und einer Hülle 13b, die den Seilzug 13a umgibt, einen Bremskraftverteiler 7 und zwei Bremsseile 8a und 8b. Der Bodenzug 6 wird durch einen Hebel 28, der an einem Handgriff eines nicht gezeigten Fahrzeugs drehbar angeordnet ist, in bekannter Weise betätigt, wobei der an einem Ende des Hebels 28 befestigte Seilzug 13a in der durch den Pfeil angegebenen Drehrichtung aus der Hülle 13b gezogen wird.

Der Bremskraftverteiler 7 umfasst ein Rumpfteil in Form eines Gehäuses 9 mit einem Aufnahmeraum 9a und eine Umlenkeinrichtung in Form eines auf einer Bodenplatte 9b des Gehäuses 9a senkrecht stehenden zylindrischen Teils 10, wie in der Detail-Seitenansicht im Schnitt in Fig. 1 zu sehen ist. In der Draufsicht in Fig. 1 ist die Abdeckplatte des Gehäuses nicht gezeigt.

Der Seilzug 13a des Bowdenzugs 6 erstreckt sich durch eine erste Gehäuse-Durchgangsöffnung 12a in den Aufnahmeraum 9a des Gehäuses 9. Im Gehäuse ist der Seilzug 13 um das zylindrische Teil 10 gelegt, so dass der Seilzug 13a in etwa in entgegengesetzter Richtung das Gehäuse durch eine zweite Gehäuse-Durchgangsöffnung 12b, nun aber als Bremsseil 8b verlässt. Das Bremsseil 8b ist mit der Bremse 5b verbunden und betätigt diese. Weiterhin ist das Gehäuse 9 des Bremskraftverteilers 7 über das Bremsseil 8a mit der Bremse 5a verbunden und betätigt diese.

Wird der Seilzug 13a in die durch die gestrichelte Linie angegebene Lage verschoben, wird durch Ziehen des Bremsseils 8a in Fig. 1 nach links in das Gehäuse hinein die Bremse 5b betätigt und gleichzeitig der Bremskraftverteiler infolge der Verkürzung des Seilzugs nach rechts verschoben, wodurch unmittelbar auch das an ihm befestigte Bremsseil 8a nach rechts gezogen und folglich die Bremse 5a betätigt wird.

Wie weiterhin in Fig. 1 zu sehen, ist das Bremsseil 8a lösbar am Gehäuse 9 des Bremskraftverteilers 7 befestigt. Dazu ist das Gehäuse 9 auf der Seite des Bremsseils 8a mit einer Verbindungsteil-Aufnahme 29 in Form einer seitlich offenen zylindrischen Ausnehmung versehen, in welcher ein Verbindungsteil 30, an dem das Bremsseil 8a befestigt ist und das ein zylindrisches vorderes Teil entsprechend der Verbindungsteil-Aufnahme 29 aufweist, einsteckbar ist, so dass die Verbindungsteil-Aufnahme 29 den vorderen zylindrischen Teil des Verbindungsteils 30 teilweise umgibt, um eine formschlüssige Verbindung zwischen dem Gehäuse 9 und dem Verbindungsteil 30 herzustellen.

Zur lösbaren Befestigung des Bremsseils 8b wird dieselbe Verbindungsmechanik verwendet, jedoch wird das Bremsseil nicht über ein Verbindungsteil am Gehäuse befestigt sondern es sind separat eine Verbindungsteil-Aufnahme 29' und ein Verbindungsteil 30' vorgesehen, durch welche das Bremsseil 8b an der Bremseinrichtung lösbar befestigt ist.

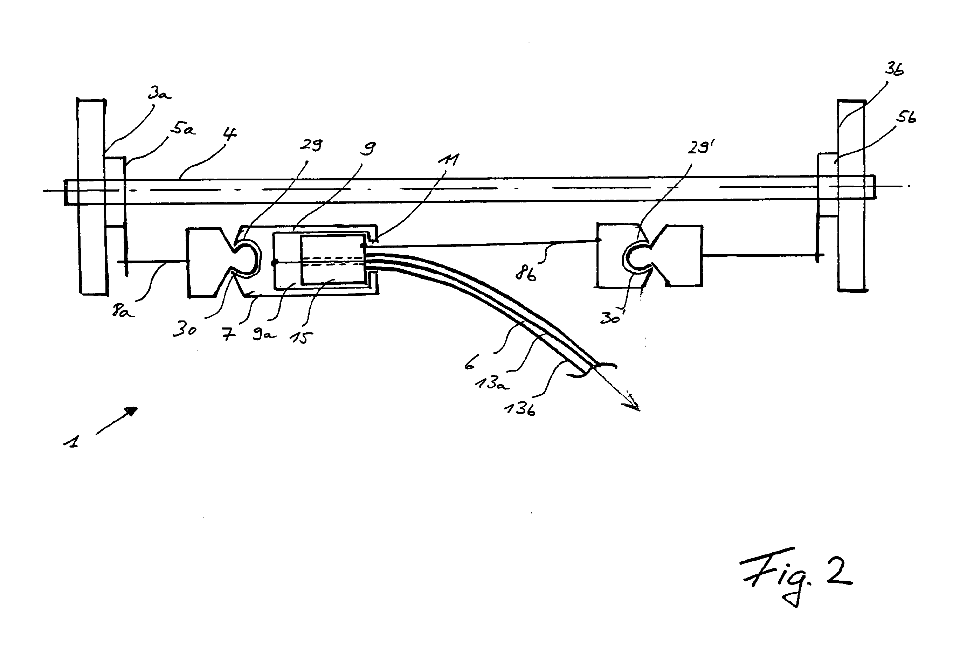

In Fig. 2 ist eine zweite Ausführungsform des erfindungsgemäßen Bremszugs 1 gezeigt. Die darin gezeigte Achseinheit 2, die Verbindungsmechanik zum Lösen der Bremsseile 8a und 8b, und der Betätigungsseilzug 6 stimmen mit Fig. 1 überein, wobei gleiche Teile mit gleichen Bezugszeigen angegeben sind. Eine Beschreibung dieser Komponenten kann daher entfallen.

Der in Fig. 2 gezeigte Bremskraftverteiler 7 umfasst ein Gehäuse 9 mit einem Aufnahmeraum 9a und ein darin verschiebbar angeordnetes Führungsteil 15. Weiterhin ist rechts im Gehäuse 9 eine Gehäuse-Durchgangsöffnung 11 gebildet. Durch die Durchgangsöffnung 11 verlaufen das Bremsseil 8b und der am Bremskraftverteiler 7 ankommende Bowdenzug 6. Das Bremsseil 8b ist mit einem Ende direkt am Führungsteil 15 befestigt und mit dem anderen Ende über die Verbindungsteile 29' und 30' mit der Bremse 5b befestigt.

Im Führungsteil 15 ist mittig eine Führungs-Durchgangsöffnung 16 gebildet, die sich in Richtung des Verschiebewegs des Führungsteils 15 erstreckt. Durch diese Führungs-Durchgangsöffnung 16 im Führungsteil 15 verläuft der Seilzug 13a hindurch und ist mit seinem Ende an der Innenseite des Aufnahmeraums 9a bzw. Innenraums des Gehäuses 9 befestigt während die Hülle 13b des Bowdenzugs 6 an der Seite der Gehäuse-Durchgangsöffnung 11 am Führungsteil 15 anliegt oder daran befestigt ist.

Wird der Seilzug 13a in der durch den Pfeil angegebenen Richtung bewegt, so wird das Gehäuse 9 des Bremskraftverteilers 7 in Fig. 2 nach rechts verschoben bzw. das Führungsteil 15 bewegt sich relativ zum Gehäuse 9 nach links. D.h. die jeweils an Gehäuse 9 und Führungsteil 15 befestigten Bremsseile 8a und 8b werden in entgegengesetzten Richtungen aufeinander zu bewegt. Dadurch wird eine Verkürzung der Gesamtlänge der Bremsseile 8a, 8b plus Bremskraftverteilerlänge erreicht, so dass beide Bremsen gleichzeitig betätigt werden.

In Fig. 2 sind sowohl die Bremsseile 8a und 8b als auch der Verschiebeweg des Führungsteils 15 im Inneren des Gehäuses 9 parallel zur Laufradachse 4 der Achseinheit 2.

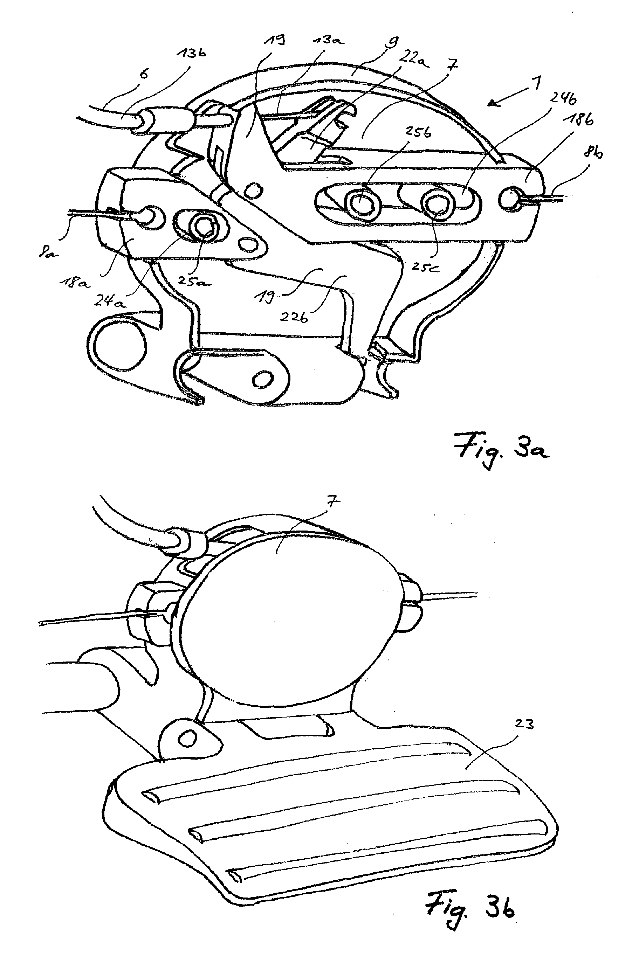

In Bezug auf Fig. 3a ist eine dritte Ausführungsform des erfindungsgemäßen Bremszugs 1 gezeigt. Aus Gründen der einfacheren Darstellung sind lediglich die am Bremskraftverteiler 7 ankommenden Bremsseile 8a und 8b und der Bowdenzug 6 samt Seilzug 13a und Hülle 13b gezeigt.

Der Bremskraftverteiler 7 in Fig. 3a umfasst ein Gehäuse 9 (ohne Deckel gezeigt), das eine ovale Form aufweist, ein V-förmiges Drehteil 17, das aus einem ersten und einem zweiten Schenkel 22a und 22b besteht, und ein erstes und ein zweites Verschiebeelement 18a und 18b. Das erste und das zweite Verschiebeelement 18a und 18b haben jeweils eine Langlochführung 24a und 24b. Durch die Langlochführung 24a des ersten, kürzeren, in Fig. 3a linken Verschiebeelements 18a erstreckt sich eine einstückig mit der Gehäusehinterwand ausgebildete Führungshülse 25a und durch die Langlochführung 24b des zweiten, längeren, in Fig. 3a rechten Verschiebeelements 18b erstrecken sich zwei, ebenfalls einstückig mit der Gehäusehinterwand ausgebildete Führungshülsen 25b und 25c.

Die Verschiebeelemente 18a und 18b sind jeweils in Form eines länglichen Teils gebildet und haben jeweils ein Ende mit einer Durchgangsöffnung zum Befestigen eines Bremsseils und jeweils ein gegenüberliegendes, nach einer Seite spitz zulaufendes Ende. Zusätzlich ist am spitzen Ende des längeren Verschiebelements 18b ein davon in etwa senkrecht nach oben abstehender, ebenfalls spitz zulaufender Schenkel 19 gebildet. Beide Verschiebeelemente 18a und 18b sind jeweils mit ihren spitzen Enden drehbar am V-förmigen Drehteil 17 befestigt, wobei das zweite Verschiebeelement 18b eine Durchgangsöffnung 20 im spitz zulaufenden vorderen Teil aufweist, durch welche sich ein Schenkel 22a des V-förmigen Drehteils 17 erstreckt.

Die beiden Verschiebeelemente 18a und 18b sind auf einer horizontalen Linie angeordnet und die Stirnseiten der einander zugewandten spitz zulaufenden Enden sind parallel zueinander angeordnet und im Nicht-Betätigungszustand voneinander beabstandet.

Die Schenkel 22a und 22b des V-förmigen Drehteils 17 sind jeweils flache, sich verjüngende Platten, wohingegen die Verschiebeelemente 18a und 18b balkenförmig mit einer breiteren und einer schmäleren Seite gebildet sind. Im zusammengesetzten Zustand sind die flache Seite des V-förmigen Drehteils 17 und die breiteren Seiten der Verschiebeelemente 18a und 18b parallel zueinander. Wie weiterhin in Fig. 3a zu sehen ist, ist der ursprünglich spitz zulaufende Verbindungsbereich der beiden Schenkel 22a und 22b des V-förmigen Drehteils 17 gekappt.

Die Verschiebeelemente 18a und 18b sind mit ihren Spitzen am ersten und zweiten Schenkel 22a und 22b des V-förmigen Drehteils 17 im Verbindungsbereich der beiden Schenkel 22a und 22b drehbar befestigt.

Ein Bowdenzug 6 mit einem Seilzug 13a und einer Hülle 13b führt durch eine Durchgangsöffnung im Gehäuse ins Gehäuseinnere. Der Seilzug 13a erstreckt durch eine Durchgangsöffnung 19a im äußeren Ende des spitz zulaufenden Schenkels 19 des zweiten Verschiebeelements 18b. Am freien Ende des ersten Schenkels 22a des V-förmigen Drehteils 17, der sich durch das längere Verbindungselement 18b erstreckt, ist ein Seilzug 13a des Bowdenzugs 6 befestigt. Die Hülle 13b des Bowdenzugs 6 stützt sich gegenüber dem zweiten Verschiebeelement 18b im Bereich des senkrecht abstehenden Schenkels 19 ab.

Bei Betätigen des Bowdenzugs 6 wird das freie Ende des ersten Schenkels 22a des V-förmigen Drehteils 17 durch den Seilzug 13a in Richtung zum senkrecht abstehenden Schenkel 19 des zweiten Verschiebeelements 18b bewegt, wobei das gesamte V-förmige Drehteil 17 um den Drehpunkt der drehbaren Verbindung zwischen V-förmigen Drehteil 17 und dem zweiten Verschiebeelement 18b im Gegenuhrzeigersinn gedreht wird. Dadurch wird gleichzeitig das am zweiten Schenkel 22b des V-förmigen Drehteils 17 drehbar befestigte kürzere Verschiebelement 18 im Gegenuhrzeiger mitgenommen und in das Gehäuse 9 geschoben während gleichzeitig der Drehpunkt der drehbaren Verbindung von erstem Schenkel 22b und längerem Verschiebeelement 18b im Gegenuhrzeigersinn nach links verschoben wird. D.h. das V-förmige Drehteil 17 wird um einen gedachten Drehpunkt gedreht. Folglich werden die beiden Verschiebeelemente 18a und 18b und somit die daran befestigten Bremsseile 8a und 8b zur Betätigung der beiden (nicht gezeigten) Bremsen in entgegengesetzten Richtungen aufeinander zu bewegt.

Wie weiterhin in Fig. 3a zu sehen ist, am äußeren Ende des zweiten Schenkels 22b des V-förmige Drehteils ein von dessen Hauptebene etwa senkrecht abstehender Betätigungsschenkel 22c gebildet, der senkrecht nach unten durch eine Durchgangsöffnung im Gehäuse nach außen verläuft, zur Betätigung mittels eines Fußpedals 23.

In Fig. 3b ist der Bremskraftverteiler 7 in Fig. 3a mit geschlossenem Gehäuse und daran angeordnetem Fußpedal 23 gezeigt. Durch das Fußpedal in Fig. 3b wird der Betätigungsschenkel 22c des V-förmigen Drehteils 17 in das Gehäuse 9 verschoben, so dass das V-förmige Drehteil 17 im Gegenuhrzeigersinn in Drehung versetzt wird und folglich die Befestigungsstellen mit den beiden Verbindungselementen 18a und 18b in Bezug auf einen gedachten Drehpunkt des V-förmigen Drehteils 17 in entgegengesetzten Querrichtungen aufeinander zu bewegt werden und über die Bremsseile 8a und 8b die (nicht gezeigten) Bremsen betätigen.

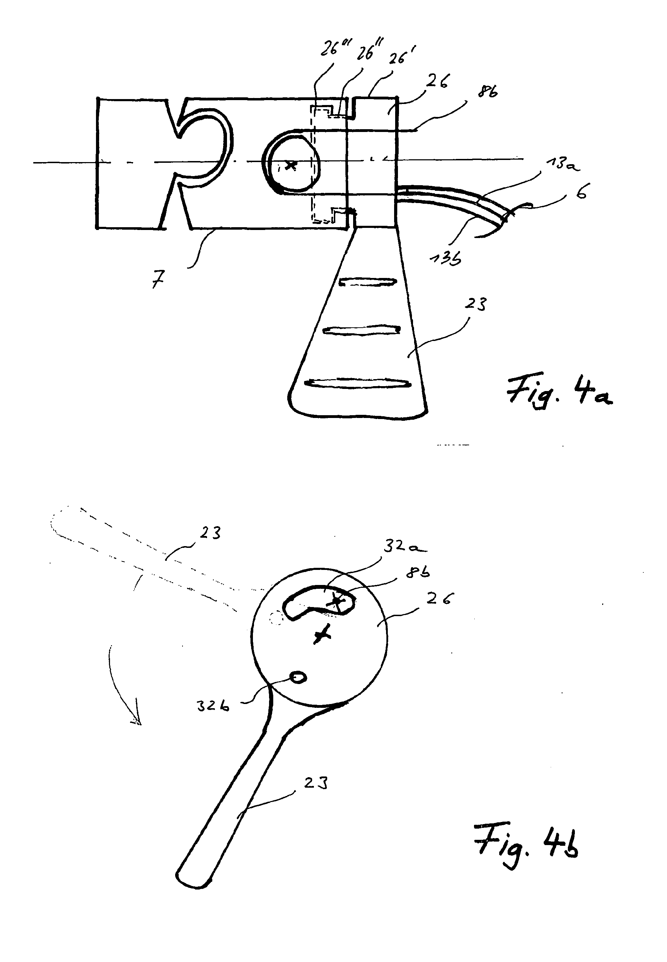

Fig. 4a zeigt die in Bezug auf Fig. 1 beschriebene erste Ausführungsform mit einem Fußpedal. Dabei ist an der Seite des Gehäuses 9 des Bremskraftverstärkers 7, an dem der Seilzug 13a und das Bremsseil 8b in bzw. aus dem Gehäuse 9 führen, ein Betätigungs-Drehteil 26 angeordnet, das bezüglich der Längsachse des Gehäuses 9 drehbar ist. Das Betätigungs-Drehteil 26 weist drei zylindrisch gebildete Abschnitte 26', 26" und 26"' auf, wobei in der Fig. 4a von rechts gesehen der erste Abschnitt 26' einen Durchmesser in etwa gleich der Breite des Gehäuses 9 hat, der zweite Abschnitt 26" den kleinsten Durchmesser hat, und der dritte Abschnitt 26"' einen Durchmesser zwischen dem ersten und dem dritten Abschnitt 26' und 26"'hat. Entsprechend dem zweiten und dritten Abschnitt 26" und 26"' ist im Gehäuse 9 eine Ausnehmung 31 gebildet, wobei die Öffnung 31" der Ausnehmung 31 einen Durchmesser entsprechend dem zweiten Abschnitt 26" hat und die Ausnehmung 31 einen breiteren Halteabschnitt 31'" mit einem Durchmesser entsprechend dem dritten zylindrischen Abschnitt 26"' des Betätigungs-Drehteils 26 hat. Am Betätigungs-Drehteil 26 ist ein Fußpedal 23 befestigt, durch welches das Betätigungs-Drehteil von einem Bediener in Drehung versetzt werden kann.

Wie Fig. 4a zu entnehmen ist, verlaufen sowohl das Bremsseil 8b als auch der Seilzug 13a des Betätigungsseilzuges 6 durch das Betätigungs-Drehteil 26. Dazu sind, wie in Fig. 4b zu sehen ist, Durchgangsöffnungen 32a und 32b vorgesehen, wobei die Durchgangsöffnung 32a eine in einem Bogenwinkel von in etwa 90° verlaufende Langlochöffnung ist, durch welche sich das Bremsseil 8b erstreckt, und die Durchgangsöffnung 32b eine Rundbohrung ist, durch welche sich der Seilzug 13a erstreckt.

In Fig. 4b sind das Fußpedal 23 und das Betätigungs-Drehteil 26 jeweils in einer Betätigungsstellung (durchgezogene Linie) und in einer Nicht-Betätigungsstellung (gestrichelte Linie) gezeigt. Beim Verschwenken des Fußpedals 23 in der in Fig. 4b durch den Pfeil angegebenen Richtung wird der Seilzug 13a quer zu seinem Längsverlauf entsprechend dem zurückgelegten Weg der Durchgangsöffnung 32b mitgenommen, so dass der Seilzug aus dem Gehäuse in Fig. 4a gezogen wird und folglich eine Bremsung, wie in Bezug auf Fig. 1 bereits beschrieben, erfolgt.

### BEZUGSZEICHENLISTE

- 1: Bremszug
- 2: Achseinheit
- 3a, 3b: Laufradeinheiten
- 4: Laufradachse
- 5a, 5b: Bremsen
- 6: Betätigungsseilzug
- 7: Bremskraftverteiler
- 8a, 8b: Bremsseile
- 9: Gehäuse
- 10: Umlenkeinrichtung
- 12a, 12b: Gehäuse-Durchgangsöffnungen
- 13a: Seilzug
- 13b: Hülle
- 14: Gehäuse-Durchgangsöffnung
- 15: Führungsteil
- 16: Führungs-Durchgangsöffnung
- 17: Drehteil
- 18a, 18b: erstes und zweite Verschiebeelement
- 19: senkrecht abstehendes Teil
- 20: Durchgangsöffnung
- 21 a, 21 b: Durchgangsöffnungen
- 22a, 22b: erster und zweiter Schenkel
- 22c: Betätigungsschenkel
- 23: Fußpedal
- 24a, 24b: Langlochführungen
- 25a, b, c: Führungshülsen
- 26: Betätigungs-Drehteil
- 27: Mitnehmer-Durchgangsöffnung

## Patentansprüche

1. Bremszug (1) für eine Achseinheit (2) mit zwei Laufradeinheiten (3a, 3b), die an einer Laufradachse (4) angeordnet sind, wobei jede der Laufradeinheiten (3) über wenigstens eine eigene Bremse (5a, 5b) verfügt, die durch einen Betätigungsseilzug (6) betätigbar ist,
**dadurch gekennzeichnet, dass**
die jeweils den Laufradeinheiten (3a, 3b) zugeordneten Bremsen (5a, 5b) durch Betätigen eines einzigen Betätigungsseilszuges (6) betätigbar sind.

2. Bremszug (1 ) nach Anspruch 1,
**dadurch gekennzeichnet, dass**
die jeweils den Laufradeinheiten (3a, 3b) zugeordneten Bremsen (5) gleichzeitig betätigbar sind.

3. Bremszug (1) nach Anspruch 1 oder 2,
**dadurch gekennzeichnet, dass**
die jeweils den Laufradeinheiten (3a, 3b) zugeordneten Bremsen (5a, 5b) dieselbe Bremskraft an den jeweiligen Laufrädern entfalten.

4. Bremszug (1) nach einem der vorhergehenden Ansprüche,
**dadurch gekennzeichnet, dass**
ein Bremskraftverteiler (7), insbesondere am dem Betätigungsende abgewandten Ende des Betätigungsseilzuges (6), vorgesehen ist, durch den die von einem Bediener auf den Betätigungsseilzug (6) aufgebrachte Zugkraft auf wenigstens zwei, den Laufradeinheiten (3a, 3b) zugeordneten Bremsseilen (8a, 8b) verteilt wird.

5. Bremszug (1) nach einem der vorhergehenden Ansprüche,
**dadurch gekennzeichnet, dass**
der Betätigungsseilzug (6) ein Bowdenzug ist.

6. Bremszug (1) nach Anspruch 4,
**dadurch gekennzeichnet, dass**
durch den Bremskraftverteiler (7) beim Betätigen des Betätigungsseilzugs (6) dessen Zugbewegung in zwei gegenläufige Zugbewegungen der wenigstens zwei Bremsseile (8), insbesondere parallel zur Laufradachse (4), umgesetzt wird.

7. Bremszug (1) nach einem der vorhergehenden Ansprüche,
**dadurch gekennzeichnet, dass**
die wenigstens zwei Bremsseile (8) parallel zur Laufradachse (4) verlaufen.

8. Bremszug (1) nach einem der Ansprüche 4 bis 7,
**dadurch gekennzeichnet, dass**
der Bremskraftverteiler (7) an der Laufradachse (4), insbesondere in etwa mittig zwischen den beiden Laufradeinheiten (3a, 3b), angeordnet ist.

9. Bremszug (1) nach einem der Ansprüche 4 bis 8,
**dadurch gekennzeichnet, dass**
der Bremskraftverteiler (7) ein Gehäuse (9), insbesondere ein kastenähnliches oder zylindrisches oder ovales Gehäuse aufweist.

10. Bremszug (1) nach einem der vorhergehenden Ansprüche,
**dadurch gekennzeichnet, dass**
der Bremskraftverteiler (7) eine Umlenkeinrichtung (10) aufweist, durch die der ankommende Betätigungsseilzug (6) umgelenkt wird und mit seinem vom Bremskraftverteiler (7) ausgehenden Ende, insbesondere das dem Betätigungsende des Betätigungsseilzuges (6) gegenüberliegende Ende, zum Betätigen einer ersten Laufradeinheit (3a) zugeordneten Bremse (5a) daran befestigt ist.

11. Bremszug (1) nach Anspruch 10,
**dadurch gekennzeichnet, dass**
zwischen dem Bremskraftverteiler (7) und der einer zweiten Laufradeinheit (3b) zugeordneten Bremse (5b) ein Verstellelement (11) angeordnet ist, insbesondere daran befestigt ist, durch welches die Bremse (5b) der zweiten Laufradeinheit (3b) betätigbar ist.

12. Bremszug (1) nach Anspruch 11,
**dadurch gekennzeichnet, dass**
das Verstellelement (11) eine Verstellstange ist.

13. Bremszug (1) nach Anspruch 11,
**dadurch gekennzeichnet, dass**
das Verstellelement (11) ein Bremsseil ist.

14. Bremszug (1) nach einem der Ansprüche 10 bis 13,
**dadurch gekennzeichnet, dass**
auf der der ersten Laufradeinheit (3a) zugeordneten Seite des Bremskraftverteilers (7) wenigstens eine, insbesondere zwei Durchgangsöffnungen (12a, 12b) am Gehäuse (9) des Bremskraftverteilers (7) vorgesehen sind, durch welche(s) jeweils der ankommende und der ausgehende Betätigungsseilzug (6) hindurch verläuft.

15. Bremszug (1) nach einem der Ansprüche 10 bis 14,
**dadurch gekennzeichnet, dass**
die Umlenkeinrichtung (10) eine Umlenkrolle ist.

16. Bremszug (1) nach einem der Ansprüche 10 oder 14,
**dadurch gekennzeichnet, dass**
die Umlenkeinrichtung (10) ein feststehendes, insbesondere ein mit dem Gehäuse (9) der Umlenkeinrichtung (10) einstückig ausgebildetes Teil mit einer zylindrischen Außenfläche ist.

17. Bremszug (1 ) nach einem der Ansprüche 10 bis 16,
**dadurch gekennzeichnet, dass**
sich die Hülle (13) des am Bremskraftverteilers (7) ankommenden Bowdenzugs (6) an der Außenseite des Gehäuses (9) des Bremskraftverteilers (7) abstützt.

18. Bremszug (1) nach einem der Ansprüche 10 bis 17,
**dadurch gekennzeichnet, dass**
durch Verschieben des Betätigungsseilzuges (6) in Richtung weg vom Bremskraftverteiler (7) die der ersten Laufradeinheit (3a) zugeordnete Bremse (5a), an welcher der Betätigungsseilzug (6) befestigt ist, betätigt und gleichzeitig der gesamte Bremskraftverteiler (7) samt des an ihm befestigten Vertellelements (11) in Richtung zur ersten Laufradeinheit (3a) verschoben wird, so dass gleichzeitig durch diese Verschiebung die der zweiten Laufradeinheit (b) zugeordnete Bremse betätigt (5b) wird.

19. Bremszug (1) nach einem der Ansprüche 1 bis 9,
**dadurch gekennzeichnet, dass**
an der der ersten Laufradeinheit (3a) zugewandten Seite des Gehäuses (9) des Bremskraftverteilers (7) eine Gehäuse-Durchgangsöffnung (14) gebildet ist.

20. Bremszug (1) nach Anspruch 19,
**dadurch gekennzeichnet, dass**
im Inneren des Gehäuses (9) ein in Längsrichtung des Innenraums des Gehäuses (9) verschiebbares Führungsteil (15) angeordnet ist, welches eine Durchgangsöffnung (16) aufweist, die mit der Gehäuse-Durchgangsöffnung (14) fluchtet.

21. Bremszug (1) nach Anspruch 20,
**dadurch gekennzeichnet, dass**
der Betätigungsseilzug (6) ein Bowdenzug mit einem Seilzug (13a) und einer Hülle (13b) ist, wobei sich der Seilzug (13a) durch die Gehäuse-Durchgangsöffnung (14) und durch die Durchgangsöffnung (16) im Führungsteil (15) erstreckt und an der Innenseite des Gehäuses (9) befestigt ist.

22. Bremszug (1) nach Anspruch 21,
**dadurch gekennzeichnet, dass**
sich die Hülle (13b) des Bowdenzugs durch die Gehäuse-Durchgangsöffnung (14) erstreckt und sich am verschiebbaren Führungsteil (15) abstützt.

23. Bremszug (1) nach einem Ansprüche 19 bis 22,
**dadurch gekennzeichnet, dass**
ein erstes Bremsseil (17a) vorgesehen ist, das sich durch die Gehäuse-Durchgangsöffnung (14) oder eine separat vorgesehene Durchgangsöffnung (14') erstreckt, wobei ein Ende des ersten Bremsseils (17a) am Führungsteil (15) befestigt ist und das gegenüberliegende Ende des ersten Bremsseils (17a) an der der einer ersten Laufradeinheit (3a) zugeordneten Bremse (5a) befestigt ist.

24. Bremszug (1) nach einem der Ansprüche 19 bis 23,
**dadurch gekennzeichnet, dass**
ein zweites Bremsseil (17b) vorgesehen ist, das mit einem Ende an der der Gehäuse-Durchgangsöffnung (14) gegenüberliegenden Seite außen am Gehäuse (9) befestigt ist und mit dem anderen Ende der einer zweiten Laufradeinheit (3b) zugeordneten Bremse (5b) befestigt ist.

25. Bremszug (1) nach Anspruch 24,
**dadurch gekennzeichnet, dass**
durch des Verschieben der Betätigungsseilzuges (6) das Gehäuse (9) des Bremskraftverteilers (7) in Richtung zur Hülle (13b) des Bowdenzuges verschoben wird, so dass sich das Führungsteil (15) samt dem an ihm befestigten ersten Bremsseil (17a) relativ zum Gehäuse (9) in Richtung zur der der Gehäuse-Durchgangsöffnung (14) gegenüberliegenden Innenseite des Gehäuses (9) verschiebt, wodurch die Gesamtlänge von erstem Bremsseil (17a), zweitem Bremsseil (17b) und Bremskraftverteiler (7) verkürzt und folglich beide den Laufradeinheiten (3a, 3b) zugeordneten Bremsen (5a, 5b) gleichzeitig betätigt werden.

26. Bremszug (1) nach einem der Ansprüche 1 bis 9,
**dadurch gekennzeichnet, dass**
im Inneren des Gehäuses (9) des Bremskraftverteilers (7) ein um eine Drehachse (18) drehbar gelagertes Drehelement (19) vorgesehen ist.

27. Bremszug (1) nach Anspruch 26,
**dadurch gekennzeichnet, dass**
die beiden Bremsseile (17a, 17b) an Stellen auf dem Drehelement (19) befestigt sind, die sich bezüglich der Drehachse (18) jeweils auf gegenüberliegenden Seiten am Drehelement (19) befinden, und der Betätigungsseilzug (6) an einer Stelle am Drehelement (19) befestigt ist, die weiter von der Drehachse (18) beabstandet ist als die Stellen, an denen die Bremsseile (17a, 17b) befestigt sind.

28. Bremszug (1) nach Anspruch 27,
**dadurch gekennzeichnet, dass**
im Gehäuse (9) eine Durchgangsöffnung (20) vorgesehen ist, durch welche sich der Betätigungsseilzug (6) in das Gehäuse (9) erstreckt, und jeweils auf den den Laufradeinheiten (3a, 3b) zugewandten Seiten des Gehäuses (9) jeweils eine Durchgangsöffnung (21a, 21b) zum Durchführen der Bremsseile (17a, 17b) vorgesehen ist.

29. Bremszug (1) nach einem der Ansprüche 26 bis 28,
**dadurch gekennzeichnet, dass**
das Drehelement (19) eine drehbar gelagerte Stange ist.

30. Bremszug (1) nach einem der Ansprüche 26 bis 28
**dadurch gekennzeichnet, dass**
das Drehelement (19) eine drehbar gelagerte Scheibe ist.

31. Bremszug (1) nach einem der Ansprüche 26 bis 28,
**dadurch gekennzeichnet, dass**
das Drehelement (19) ein V-förmiger Bügel mit einem ersten und einem zweiten Schenkel (22a, 22b) ist.

32. Bremszug (1) nach Anspruch 31,
**dadurch gekennzeichnet, dass**
an einem äußeren Ende des V-Bügels ein weiterer Schenkel (22c) ausgebildet ist, der sich vom Inneren des Gehäuses (9) nach außerhalb des Gehäuses (9) erstreckt und zum Betätigen mittels einer Fußpedalvorrichtung (23) vorgesehen ist.

33. Bremszug (1) nach Anspruch 26 bis 32,
**dadurch gekennzeichnet, dass**
zwei Verbindungselemente (23a, 23b) vorgesehen sind, die sich vom Gehäuseinneren nach außerhalb des Gehäuses (9) durch Durchgangsöffnungen (21a, 21 b) im Gehäuse (9) erstrecken und jeweils mit einem Ende am V-Bügel drehbar befestigt sind und am jeweils anderen Ende ein Bremsseil (17a, 17b) befestigt ist.

34. Bremszug (1) nach Anspruch 33,
**dadurch gekennzeichnet, dass**
die Verbindungselemente (23a, 23b) jeweils eine Langlochführung (24a, 24b) aufweisen, durch welche sich Führungsbolzen (25), die senkrecht zur Drehebene des Drehelements (18) gebildet sind, erstrecken.

35. Bremszug (1) nach einem der Ansprüche 4 bis 34,
**dadurch gekennzeichnet, dass**
ein Betätigungs-Drehteil (26) am Bremskraftverteiler (7) vorgesehen ist, das um eine Drehachse parallel zum Betätigungsseilzug (6) bezüglich des Bremskraftverteilers (7) drehbar gelagert ist, mit einer Mitnehmer-Durchgangsöffnung (27) zum Durchführen des ankommenden Betätigungsseilzugs (6), welche bei Drehung des Betätigungs-Drehteils (26) den Betätigungsseilzug (6) in Drehrichtung mitnimmt

36. Bremszug (1) nach Anspruch 35,
**dadurch gekennzeichnet, dass**
am Betätigungs-Drehteil (26) eine Fußpedalvorrichtung (23) vorgesehen ist, durch welche das Betätigungs-Drehteil (26) von einem Bediener zur Betätigung des Betätigungsseilzugs (6) in Drehung versetzt werden kann.
